# EUROPEAN PATENT APPLICATION

(11) **EP 2 071 691 A2**
(43) Date of publication of application: **17.06.2009**
(21) Application number: 07822880.6
(22) Date of filing: 31.07.2007
(51) Int. Cl.: H02J 3/16, H02J 3/18, F03D 9/00, H02J 3/38

(54) **REACTIVE ENERGY COMPENSATOR**

(30) Priority: 31.07.2006 ES 200602074
(71) Applicant: Rodríguez Tornell, Juan José, 15510 Neda La Coruña (ES); Torres Santana, José, Las Palmas de Gran Canaria (ES)
(72) Inventor: Rodríguez Tornell, Juan José, 15510 Neda La Coruña (ES); Torres Santana, José, Las Palmas de Gran Canaria (ES)
(74) Representative: de Justo Vàzquez, Jorge M.
(86) International application number: PCT/ES2007/000472
(87) International publication number: WO 2008/015306

(57) **Abstract**

Static reactive power compensator for wind power generators with squirrel-cage induction machines, in dynamic operation in case of voltage dips in the power grid, comprising control means and power means and connected to the power grid in parallel to a wind power generator device with a squirrel-cage induction machine; in which said control means include a detection unit and a command unit and in which said power means include a capacitor unit and a transformer unit; in which said control means analyse voltages and currents and calculate voltage derivatives and reactive and active powers, commanding in accordance said power means to maintain the inductive units magnetised and supply reactive power to the common connection point of said wind power generator device.

## Description

### FIELD OF THE INVENTION

The present invention relates to a reactive power compensator.

More specifically, it relates to a static relative power compensator for wind power generators with a squirrel-cage induction machine, in dynamic operation in case of voltage dips in the power grid.

### BACKGROUND OF THE INVENTION

Wind power generators with squirrel-cage induction machines use a certain amount of reactive electric power from the grid; this is, a certain amount of electric energy is used to generate the magnetic field required for operating the inductive units incorporated in those wind power generators.

If the electric grid voltage falls and these wind power generators fail to receive the reactive electric power needed by their inductive units, in some cases the wind power generator speed runs out of control and the generator must be disconnected due to overspeed, die to the loss of the field produced by the induction machines incorporated in them.

In other cases, depending on the existing operative conditions and the structural characteristics, if the power grid voltage falls and these wind power generators do not receive the reactive power they need for their inductive units, the motor torque falls in the affected generators (as this torque is approximately proportional to the square of the voltage), slowing down or even stopping the wind power generator.

In relation to this, a need observed in the wind power generation sector is to improve the behaviour of the wind power generators in case of "voltage dips".

A voltage dip occurs in the power grid when the voltage of one or more phases falls under a pre-defined limit (generally 90% of the nominal voltage) without reaching zero, recovering after a specified time normally 10 milliseconds to 1 minute).

The typical cause of voltage dips is a fault in the power grid or in the client installations, leading to short-circuit currents in one or more phases.

When a voltage dip occurs, this is, there is a voltage drop in the power grid for the duration of a failure, so that the wind power generators do not receive the reactive electric power needed for their inductive units, causing the aforementioned problems.

In addition, when the voltage dip ends magnetisation takes place simultaneously in all wind power generators with squirrel-cage induction machines of an industrial installation, adding the currents in the power supply. According to certain studies, if the dip duration is greater than one second the magnetisation current is on the order of the start-up current in the affected wind power generators, this is, five to six times the nominal current, so that this process can lead to a new voltage dip that will delay the recovery of the nominal regime.

It is therefore desirable that the inductive units of these wind power generators remain substantially magnetised during the "voltage dips" associated to, for example, correctly cleared short-circuits and that they support, without substantial demagnetisation, tri-phasic bi-phasic or mono-phasic voltage dips in the point of connection to the grid with predetermined magnitude and duration profile.

### SUMMARY OF THE INVENTION

The present invention therefore provides a reactive power compensator that deals with the aforementioned problems; specifically, a static reactive power compensator for wind power generators with squirrel-cage induction machines, in dynamic operation in case of voltage dips in the electric power grid.

In its simplest form, the compensator of the invention comprises power means connected to the wind power injection line of a wind power generator device with a squirrel-cage induction machine, in parallel to said wind power generator device, including a capacitor unit and a transformer unit.

Said capacitor unit comprises an array of capacitors and said transformer unit is a transformer with a variable transformation ratio.

In a more complete form, the compensator of the invention comprises control means and power means and is connected to the wind power injection line of a wind power generator device with sguirrel-cage induction machine, in parallel to said wind power generator device.

Said power means are connected on one side to said control means, and on the other to the wind power injection line of said wind power generator device, and include a capacitor unit and a transformer unit.

Said capacitor unit comprise an array of capacitors and said transformer unit is a transformer with a variable transformation ratio.

Said control means include a detection unit and a command unit.

Said control means mainly detect voltages and currents in real time in the wind power injection line of the aforementioned wind power generator device and in the connection point, analyse these parameters and calculate the voltage derivatives, as well as the reactive and active power at each time, to command the power means accordingly.

To this end, the control means are connected on one side to the wind power injection line of said wind power generator and the common connection point, and on the other side reciprocally to said power means.

Said control means are preferably embodied in a microcomputer.

In constant regime and in absence of perturbation or grid failures, the control means calculate the reactive power demanded by both the power grid and the wind power generator device, acting on said power means to operate as a conventional and discrete compensator of reactive powers.

In case of a perturbation in the network causing a voltage dip, these control means act on said power means to supply the sufficient reactive powder so that, on one hand, the inductive units incorporated in the wind power generator device remain substantially magnetised and, on the other, reactive power is supplied to the common connection point of said wind power generator device to avoid consuming reactive power from the electric power grid at any time.

### BRIEF DESCRIPTION OF THE FIGURES

The main characteristics of the present invention will be made clear by the following detailed description thereof, provided for purpose of illustration only in a non-limiting sense, with reference to the accompanying drawings, in which:
Figure 1 shows an assembly scheme representing a wind power generator device including a first embodiment of a reactive power compensator according to the invention;
Figure 2 shows an assembly scheme representing a wind power generator device including a second embodiment of a reactive power compensator according to the invention and a wind power generator device not including a reactive power compensator according to the invention, both connected to the same common connection point;
Figure 3 shows a graph representing a specific profile of a voltage dip; and
Figure 4 shows a graph representing the response of the reactive power compensator according to the invention as shown in figure 2 with the voltage dip of figure 3.

### DETAILED DESCRIPTION OF THE INVENTION

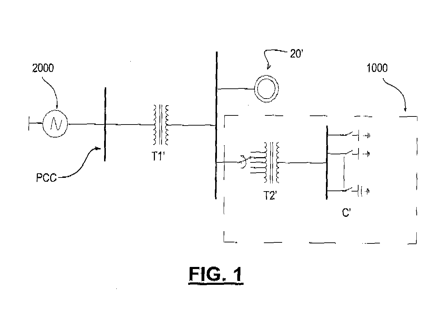

Figure 1 shows a reactive power compensator 1000 according to the invention, connected in parallel to a wind power generator device 20' with a squirrel-cage induction machine.

The assembly formed by said wind generator device 20' and said reactive power compensator 1000 according to the invention is connected to the electrical power grid 2000 by a common connection point PCC, with an intermediate transformer T1'.

Said reactive power compensator 1000 according to the invention comprises a capacitor array C' and a transformer with a variable transformation ratio or transformed T2'.

In this way, by acting on the transformation ratio of transformer T2' the voltage in the capacitor array C' can be maintained, although in case of a fault the voltage will be small on the other side of the transformer T2', this modulation of transformer T2' in addition avoiding the need to oversize the capacitor array C' as would otherwise be necessary to fulfil certain demanding criteria for dealing with faults.

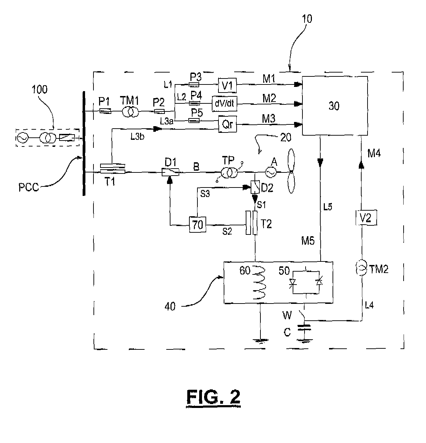

Figure 2 shows an assembly 10 comprising a wind power generator device 20 provided with a reactive power compensator according to the invention, said assembly 10 being connected to the power grid 100 by a common connection point PCC.

Anyone skilled in the art will understand that one or more assemblies analogous to the assembly 10 can be connected to the common connection point PCC, optionally in combination with one or more wind power generator devices not provided with a reactive power compensator according to the invention, without this being out of the scope of the present invention.

In addition, it will be understood that the assembly 10 can comprise several wind power generator device 20, all of which are coupled in parallel to the same reactive power compensator according to the invention, also without being out of the scope of the present invention.

Specifically, figure 1 shows an assembly 10 including, on one hand, a wind power generator device 20 with its wind turbine A itself and its wind power injection line B with its polyphasic transformer TP (usually in the form of an electronic converter) and circuit breaker D1 and, on the other hand, a reactive power compensator according to the invention.

Said reactive power compensator is connected to the common connection point PCC in parallel to said wind power generator device 20 and comprises, starting from the common connection point PCC, a first fuse P1, a tri-phasic measurement transformer TM1 (formed by three mono-phasic transformers) and a second fuse P2, followed by three lines L1, L2 and L3a in radial disposition, each of which includes a fuse, respectively P3, P4 and P5.

Said lines L1, L2 and L3a, the latter being in common with a line 3b that arrives from a measurement current transformer T1 interposed between the common connection point PCC and said wind power generator device 20, respectively generate a signal M1 with voltage V1, a signal M2 with voltage slope dV/dt and a signal M3 with reactive power Qr. These signals are fed via each of the lines L1, L2 and L3a+L3b to the control means materialised in this embodiment in a microcomputer 30.

Said microcomputer 30 in turn supplies a signal M5 via a line L5 to the power means 40.

Said power means 40 include a transformer that basically comprises, as is usual, a set of thyristors in antiparallel, labelled as a whole by the number 50, and an inductor 60.

Three branches emerge from said power means 40: a first branch (that is part of said power means) is connected to ground with an interposed switch W and an array of capacitors C (in this order from said transformer 50, 60); a second branch is connected directly to ground; and a third branch is connected to the wind power generator device 20.

Said third branch is connected to said wind power generator device 20 with an intermediate circuit that includes, starting from said power means 40, a transformer T2 from which leave two shunts: a shunt S1 that ends in an intermediate point between said polyphasic transformer TP and the wind generator A itself, and a shunt S2 that ends in the circuit breaker D1.

A line L4 that includes a tri-phasic measurement transformer TM2 and which leaves from a point of the first branch located between said switch W and said array of capacitors C, returns to said microcomputer 30 delivering a signal M4 with voltage V2. It should be obvious to an expert in the field that said array of capacitors can be replaced by a single capacitor if this is best suited to the specific requirements of the application.

Said shunt S1 includes a circuit breaker D2 and said shunt S2 includes a numerical overcurrent protection device 70, a third shunt S3 being provided that connects said numerical overcurrent protection device 70 and said circuit breaker D2.

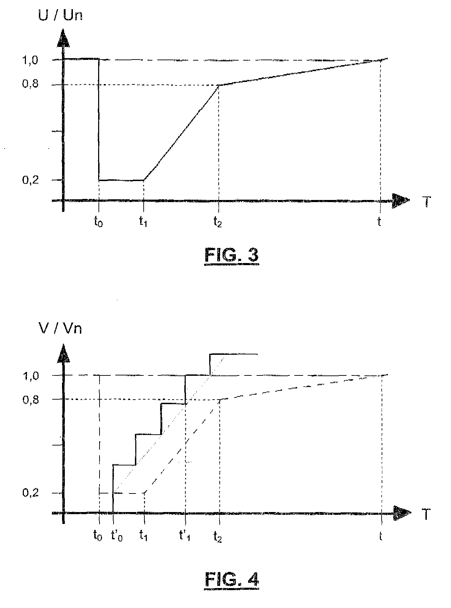

With reference now to figures 2 and 3, a perturbation in the electric power grid is discussed now that causes a voltage dip in the electric power grid by way of example.

In both figures the voltages are shown as ratios with respect to the nominal value, assuming by way of example a nominal value Un for the electric power grid equal to the nominal value Vn of the voltage of the power means 40.

This voltage dip has a voltage profile U represented by a continuous line in the graph of figure 2, showing a time t₀ of instantaneous voltage drop (in which the voltage falls to 20% of the nominal value), an interval t₀-t₁ (in which the voltage remains at 20% of the nominal voltage), a first phase t₁-t₂ of recovery of the voltage (in which it rises to 80% of the nominal voltage) and a second phase t₂-t of voltage recovery (in which it rises to its nominal value), where the duration of the first phase t₁-t₂ is less than the duration of the second phase t₂-t.

Figure 3 represents the profile of the voltage V supplied by said power means 40, superimposed with a broken line on the voltage dip shown in figure 2 for comparison purposes. In this embodiment it is assumed that the power means 40 are not supplying power to the system at the time in which the voltage dip represented begins.

One can see that said power means 40 increase their voltage when they are acted upon by the microcomputer 30 that detects in real time (by signals M1, M2 and M3) the start of the fault that leads to the voltage dip at the time to. Specifically, after a time t₀' included in the interval t₀-t₁, said power means 40 begin to provide gradually, in correspondence with the number of activated elements of the array of capacitors C, the reactive power needed to restore the voltage at the common connection point PCC, the voltage V reaching the nominal value Vn of the power means 40 (and therefore in this example also the nominal value Un of the power grid) at a time t₁' included in the interval t₁-t₂.

In constant regime and in absence of perturbation or fault in the grid, said microcomputer 30 calculates the reactive power demanded by the power grid and the wind power generator device 20, based on said signal M3, so that the power means 40 operate as a conventional and discrete compensator of reactive powers.

In case of perturbation in the grid causing a voltage dip, said microcomputer 30 acts on said power means 40 to supply the reactive power needed so that, on one hand, the induction units incorporated in said wind power generator device 20 remain substantially magnetised and, on the other hand, reactive power is supplied to the common connection point PCC to avoid consuming reactive power from the power grid at any time.

When said voltage dip has passed, the reactive power compensator according to the invention returns to the aforementioned configuration in which it operates again as a conventional and discrete reactive power compensator.

Naturally, provided the principle of the invention remain unchanged, the embodiments and construction details can vary widely with respect to those described and illustrated herein by way of non-limiting example only, without falling out of the scope of the invention as defined in the accompanying claims.

## Claims

1. A reactive power compensator, specifically a static compensator of reactive power for wind power generators with a squirrel-cage induction machine, in dynamic operation in case of voltage dips in the power grid, **characterised in that** it is connected to the power grid in parallel to at least one wind power generator device (20) with a squirrel-cage induction machine, which includes its wind power generator (A) itself and its line (B) for wind power injection with a polyphasic transformer (TP) and a circuit breaker (D1), and **in that** it comprises control means (30) and power means (40), said control means (30) including a detection unit that detects voltages and currents in real time in said wind power injection line (B) and in the common connection point (PCC), analyses the values detected and calculates the voltage derivatives and the reactive and active powers at each time, and a command unit which commands said power means (40), the aforementioned control means (30) being connected on one side to said wind power injection line (B) and to the common connection point (PCC) and on the other side to said power means (40), said power means (40) including a capacitor unit (C) and a transformer unit (50, 60), said power means (40) being connected on one side reciprocally to said control means (30) and on the other side to said wind power injection line (B).

2. Reactive power compensator according to claim 1, in which said control means comprise a microcomputer (30).

3. Reactive power compensator according to any one of claims 1 and 2, in which said capacitor unit (C) and said transformer unit (50, 60) are connected with an interposed switch (W).

4. Reactive power compensator according to any one of the above claims, in which said transformer unit comprises a set of thyristors (50) in antiparallel and an inductor (60).

5. Reactive power compensator according to ary one of the above claims, in which said capacitor unit (C) comprises either one capacitor or a plurality of capacitors.

6. Reactive power compensator according to any one of the above claims, in which said control means (30) are connected to the common connection point (PCC) in parallel to said wind power generator device (20) by an assembly that comprises, starting from the common connection point (PCC), a first fuse (P1), a tri-phasic measurement transformer (TM1) and a second fuse (P2), followed by a first line (L1), a second line (L2) and a third line (L3a) in radial disposition, each of which includes a fuse (P3, P4, P5); and in which said control means (30) are connected to said wind power injection line (B) by a fourth line (L3b) that arrives from a measurement current transformer (T1) provided in said wind power injection line (B); said first line (L1) delivering a first signal (M1) to said control means (30), said second line (L2) delivering a second signal (M2) to said control means (30) and said third and fourth lines (L3a, L3b) jointly delivering a third signal (M3) to said control means (30).

7. Reactive power compensator according to claim 6, in which said tri-phasic measurement transformer (TM1) comprises three mono-phasic transformers.

8. Reactive power compensator according to any one of the above claims, in which said control means (30) and said power means (40) are connected to each other by a line (L4), which transmits a fourth signal (M4) from said power means (40) to said control means (30), and a line L5) that transmits a fifth signal (M5) from said control means (30) to said power means (40).

9. Reactive power compensator according to claim 8, in which said line (L4) includes a tri-phasic measurement transformer (TM2).

10. Reactive power compensator according to any of claims 3 or 4 to 9 when they depend on 3, in which said line (L4) runs out from said power means (40) at a point located between said switch (W) and said capacitor unit (C).

11. Reactive power compensator according to any one of the above claims, in which said power means are connected to said wind power injection line (B) by an intermediate circuit that includes, starting from said power means (40), a transformer (T2) from which leave two shunts, one shunt (S1) leading to an intermediate point between said polyphasic transformer (TP) and said wind power generator (A) itself and the other shunt (S2) leading to said circuit breaker (D1), said shunt (S1) including a circuit breaker (D2) and said shunt (S2) including an overcurrent numerical protection device (70), a third shunt (S3) being provided that puts in contact said overcurrent numerical protection device (70) and said circuit breaker (D2).

12. Operation method for a reactive power compensator, specifically a static reactive power compensator for wind power generators with squirrel-cage induction machines, in dynamic operation in case of voltage dips in the power grid, according to any one of the above claims, **characterised in that** in constant regime and in absence of power grid perturbation or fault, said control means (30) calculate the reactive power demanded by both the power grid and said wind power generator device (20) based on said third signal (M3) and said power means (40), acting by means of the said fifth signal (M5) so that said power means act as a conventional and discrete reactive power compensator; and, in case of grid perturbation leading to a power dip, said control means (30) detect in real time the beginning of the fault that causes the voltage dip by means of the first, second and third signals (M1, M2, M3), and act on said power means (40) by means of said fifth signal (M5) to increase the voltage and supply the reactive power needed so that, on one hand, the inductive units incorporated in said wind power generator device (20) remain substantially magnetised and, on the other hand, reactive power is supplied to the common connection point (PCC) so that at no time is reactive power consumed from the power grid, the reactive power compensator returning to said configuration in which it operates as a conventional and discrete reactive power compensator after said voltage dip has ended; said control means (30) receiving said fourth signal (M4).

13. Operation method for a reactive power compensator according to claim 12, in which in case of perturbation in the grid leading to a voltage dip, said power means (40) increase the voltage in a staggered manner.

14. A reactive power compensator, specifically a static reactive power compensator for wind power generators with squirrel-cage induction machines, in dynamic operation in case of voltage dips in the power grid, **characterised in that** said reactive power compensator (1000) is connected in parallel to a wind power generator device (20') with a squirrel-cage induction machine, the wind power generator device (20') and reactive power compensator (1000) assembly being connected to the power grid (2000) by a common connection point (PCC) with an intermediate transformer (T1'), said reactive power compensator (1000) comprising an array of capacitors (C') and a transformer with a variable transformation ratio or transformer (T2').
